# FASCICULE DE BREVET EUROPEEN

(11) **EP 1 751 072 B1**
(45) Date de publication et mention de la délivrance du brevet: **06.07.2016**
(21) Numéro de dépôt: 05762655.8
(22) Date de dépôt: 10.05.2005
(51) Int. Cl.: C03C 17/34, B32B 7/02, G02F 1/1333, G02B 1/04, G02B 1/11, G02B 1/113, G02B 1/115, B32B 3/26

(54) **SUBSTRAT A REVETEMENT PHOTOCATALYTIQUE**
SUBSTRAT MIT FOTOKATALYTISCHER BESCHICHTUNG
SUBSTRATE HAVING A PHOTOCATALYTIC COATING

(30) Priorité: 10.05.2004 FR 0450895
(43) Date de publication de la demande: 14.02.2007
(73) Titulaire: SAINT-GOBAIN GLASS FRANCE, 92400 Courbevoie (FR)
(72) Inventeur: GUENEAU, Lethicia, F-94300 Vincennes (FR); RONDET, M., 6, Avenue de la Commune de Paris, F-94400 Vitry sur Seine (FR); MATTMANN, Eric, F-75013 Paris (FR)
(74) Mandataire: Teyssedre, Laurent
(86) Numéro de dépôt international: PCT/FR2005/050307
(87) Numéro de publication internationale: WO 2005/110937

(56) Documents cités:
- EP-A- 1 291 331
- EP-A- 1 300 374
- FR-A- 2 838 734
- FR-A- 2 841 894
- US-A- 6 103 363
- US-A1- 2003 215 648
- US-A1- 2004 043 260

## Description

La présente invention se rapporte à des substrats au moins partiellement transparents munis d'un revêtement photocatalytique, au procédé d'obtention d'un tel revêtement, aux produits obtenus et aux différentes applications desdits produits.

Elle concerne plus particulièrement des substrats possédant à la fois une fonctionnalité anti-reflet et un revêtement photocatalytique.

Les revêtements selon l'invention permettent ainsi de conférer de nouvelles fonctionnalités aux matériaux qui les supportent, en combinant notamment des propriétés anti-salissures, fongicides ou bactéricides à des propriétés de diminution de la réflexion lumineuse.

Les substrats selon la présente invention sont des substrats transparents ou semi-transparents, de nature minérale ou organique, tels que des verres ou vitrocéramiques ou différents polymères rigides ou souples.

Dans des domaines aussi divers que les vitrages pour vitrines ou comptoirs, les vitrages pour automobile comme les pare-brise, ou encore les lentilles ophtalmiques, est apparu depuis quelques années un besoin de diminution de la réflexion lumineuse. Ce besoin est motivé par des raisons essentiellement esthétiques, dans le cas notamment des vitrines de magasin ou de musée, lorsqu'il s'agit de mettre en valeur les objets situés derrière ces vitrines, ou encore dans le cas des lentilles ophtalmiques. Dans ce dernier cas, l'utilisation de couches anti-reflets se révèle primordiale car du fait de la diminution constante de l'épaisseur des verres, des polymères à fort indice de réfraction (et donc à fort facteur de réflexion) sont de plus en plus employés. Des raisons de sécurité peuvent également motiver le besoin de diminution de la réflexion lumineuse des substrats transparents : c'est par exemple le cas pour les vitrages pour automobile, notamment les pare-brise, afin d'éviter au conducteur d'être gêné par les réflexions parasites pouvant être importantes particulièrement dans le cas de tableaux de bord de couleurs claires. Le besoin peut enfin être motivé par des raisons fonctionnelles, par exemple dans le cas des vitrages recouvrant les cellules photovoltaïques de panneaux solaires produisant de l'électricité. Dans ce cas, toute augmentation de la transmission du vitrage (par exemple en diminuant l'intensité des rayons réfléchis) génère un gain énergétique important.

Des revêtements divers ont été mis au point pour répondre à cette attente, tant dans le cas des substrats minéraux que des substrats organiques. Ils sont destinés à diminuer le facteur de réflexion lumineuse d'un substrat donné, voire à l'annuler dans certains cas. De manière générale, on considère qu'un revêtement possède une fonctionnalité anti-reflets lorsqu'il présente un facteur de réflexion plus faible que celui du substrat non-revêtu.

Le principe physique commun à ces revêtements consiste à créer différentes interfaces donnant naissance à des réflexions multiples qui vont interférer majoritairement de manière destructive.

De tels revêtements destinés aux lentilles ophtalmiques sont par exemple décrits dans la demande de brevet FR 2 721 720. Ils peuvent être rudimentaires, constitués d'une seule couche de matériaux diélectriques dont l'épaisseur optique (c'est-à-dire le produit de l'épaisseur géométrique par l'indice de réfraction du matériau) est égale à λ/4, λ étant une longueur d'ondes moyennée dans le domaine du visible, donc autour de 550nm. Dans ce cas, on n'obtient un facteur de réflexion lumineuse faible que pour une incidence des rayons lumineux quasi-normale. Pour les autres incidences, des couleurs en réflexion variant avec l'angle d'incidence ou d'observation témoignent du caractère seulement partiellement destructif des interférences créées. Les revêtements anti-reflets peuvent également être plus complexes et comprendre au moins 3 ou 4 couches afin d'améliorer ces aspects esthétiques. Ils peuvent aussi être amenés à répondre à des cahiers des charges exigeants en termes de résistance mécanique ou thermomécanique ou de résistance à l'abrasion. La demande de brevet FR 2 841 894 décrit ainsi des revêtements anti-reflets destinés à des vitrages devant subir des traitements de bombage, donc des sollicitations mécaniques fortes à des températures élevées. Ces revêtements sont constitués d'un empilement d'au moins quatre couches, alternant des couches possédant un fort indice de réfraction et des couches possédant un faible indice, chaque couche ayant en outre une épaisseur optique bien définie.

L'inconvénient majeur de ce type de revêtements provient du fait que leur effet optique est extrêmement affecté par les salissures, notamment de nature organique. En d'autres termes, il est apparu que ces revêtements anti-reflets rendent beaucoup plus visibles les salissures, même lorsqu'elles présentent une épaisseur très faible, car elles modifient le trajet optique des rayons réfléchis en ajoutant des interfaces non-désirées, perturbant ainsi les effets interférentiels. Ainsi les pollutions organiques du type « traces de doigt» sont-elles particulièrement révélées par les revêtements anti-reflets, par exemples sur des verres de lunette ou des comptoirs de magasins.

Parallèlement aux recherches menées sur les revêtements anti-reflets, on assiste depuis moins de dix ans à l'émergence de revêtements anti-salissures, principalement basés sur l'activité photocatalytique de l'oxyde de titane. L'oxyde de titane, notamment lorsqu'il est cristallisé, au moins partiellement, sous la forme cristallographique « anatase », permet, sous l'effet de rayonnements, notamment ultraviolets, de catalyser l'oxydation par réactions radicalaires, et donc la dégradation, de molécules organiques. Le mécanisme physique sous-jacent est la création d'une paire électron-trou sous l'effet de rayonnements dont l'énergie est supérieure ou égale au « gap » énergétique entre les bandes de valence et de conduction de l'oxyde de titane. Ces revêtements, décrits par exemple dans la demande EP 850 204, présentent également des propriétés d'hydrophilie photo-induite conférant au matériau des fonctionnalités auto-nettoyantes. La surface rendue hydrophile permet en effet un nettoyage aisé, aussi bien des résidus organiques que des poussières minérales, par exemple par l'eau de pluie. Cette hydrophilie confère également au matériau un effet anti-buée, l'eau ayant tendance à napper le matériau sous la forme d'un film transparent plutôt qu'à former des gouttelettes.

Les revêtements d'oxyde de titane photocatalytique peuvent être formés par différents procédés de dépôt, par exemple par le procédé de dépôt en phase vapeur (CVD, tel que décrit dans la demande EP 850 204 susmentionnée), par le procédé de pulvérisation cathodique (la demande FR 2 814 094 en présente une méthode particulière), ou par des procédés de type « sol-gel ».

L'oxyde de titane peut être en partie introduit sous forme de particules cristallisées de taille nanométrique noyées dans un liant minéral ou organique comme décrit dans la demande FR 2 738 812, ou il peut être créé *in situ* comme dans la demande FR 2 814 094 susmentionnée. Un autre moyen consiste à déposer par procédé sol-gel un revêtement du type mésoporeux comprenant de l'oxyde de titane au moins partiellement cristallisé, notamment sous forme de particules parfaitement discernables. Ce procédé particulier, décrit dans la demande FR 2 838 734, permet de conférer au produit obtenu une activité photocatalytique accrue.

Un exemple de combinaison des deux fonctionnalités anti-salissure et anti-reflet dans un même matériau est décrit dans le document EP-A-1 291 331, dans lequel des couches d'oxyde de titane de moins de 100 nanomètres d'épaisseur déposées par procédé magnétron surmontent des empilements de couches. Après le dépôt, l'obtention de la phase anatase, qui améliore les propriétés d'hydrophilie photo-induite, est favorisée par un traitement thermique entre 100 et 250°C. Il est apparu que de telles conditions de dépôt ne permettent toutefois pas d'obtenir des couches présentant une vitesse de dégradation rapide des salissures organiques. En outre, les empilements décrits présentent de très fortes variations des propriétés de réflexion en fonction de l'épaisseur du revêtement photocatalytique, ce qui oblige à contrôler extrêmement précisément ladite épaisseur lors du dépôt dudit revêtement. Enfin, la plupart des empilements décrits contiennent au moins une couche métallique, ce qui a pour effet de diminuer fortement la transmission lumineuse du substrat revêtu. Les empilements proposés, en particulier ceux ne comprenant pas de couche métallique, présentent quant à eux un spectre en réflexion très dépendant de la longueur d'onde et notamment des valeurs de réflexion très largement supérieures à la réflexion du verre non-revêtu pour des longueurs d'onde de 400nm et/ou 700nm.

L'invention a donc pour but de pallier ces inconvénients et de proposer un matériau permettant l'élimination rapide des salissures organiques, en conditions extérieures et intérieures, et un faible facteur de réflexion sur la plus large gamme de longueurs d'ondes possible. Un autre but de l'invention est de proposer un matériau tel que le revêtement photocatalytique puisse être déposé par un procédé économique. L'invention a également pour but de proposer un matériau présentant une bonne résistance chimique et mécanique.

L'invention a principalement pour objet un substrat transparent ou semi-transparent possédant sur au moins une partie d'au moins une de ses faces un revêtement photocatalytique à base d'oxyde de titane, l'ensemble des revêtements déposés conférant une fonctionnalité anti-reflets audit substrat.

Dans le cadre de la présente invention, on appelle revêtement anti-reflets un revêtement conférant, pour la face revêtue, un facteur de réflexion lumineuse inférieur à celui conféré par une face du substrat non revêtu.

Le revêtement selon l'invention présente avantageusement une forte activité photocatalytique, définie comme étant une activité, dans des conditions d'irradiation extérieure (kₑₓₜ), exprimée en vitesse de dégradation d'acide stéarique, supérieure ou égale à 1.10⁻² cm⁻¹/min.

Le facteur de réflexion lumineuse global pour la face revêtue du matériau est de préférence inférieur ou égal à 60%, et même à 40%, voire à 20% ou 15% du facteur de réflexion d'une face du substrat non-revêtu. Selon un mode de réalisation préféré de l'invention, la valeur de réflexion d'une face revêtue est inférieure à la valeur de réflexion d'une face du substrat non-revêtu sur l'ensemble de la gamme 400-800nm, correspondant à la gamme de longueurs d'onde du rayonnement visible.

Dans le cas d'un substrat en verre silico-sodo-calcique, le facteur de réflexion de chaque face est d'environ 4%. Le revêtement selon l'invention permet donc d'obtenir préférentiellement un facteur de réflexion par face inférieur ou égal à 3,2%, notamment à 2,4%, voire à 1,6%, et même à 0,8 ou 0,6%. Lorsque les deux faces du matériau sont revêtues selon l'invention, le facteur de réflexion global dans le cas d'un substrat en verre silico-sodo-calcique peut donc être inférieur ou égal à 1,2%.

Le substrat peut être de nature minérale, par exemple en verre ou en vitro-céramique, ou de nature organique. Dans ce dernier cas, différentes matières plastiques rigides ou souples peuvent être employées telles que polyméthacrylate de méthyle (PMMA), polycarbonate (PC), polypropylène, polyuréthane, polyvinylbutyral, poly(téréphtalate d'éthylèneglycol), poly(téréphtalate de butylèneglycol), résine ionomère telle que copolymère éthylène/acide (méth)acrylique neutralisé par une polyamine, copolymère cyclooléfinique tel qu'éthylène/norbornène ou éthylène/cyclopentadiène, copolymère polycarbonate/polyester, copolymère éthylène/acétate de vinyle et similaires, seuls ou en mélanges. Plus spécifiquement dans le domaine des lentilles ophtalmiques, peuvent être également employés des substrats obtenus par polymérisation du bis(allylcarbonate) de diéthylèneglycol (commercialisé sous la marque CR39^{®} par la société PPG Industries Inc.), ou des substrats à base de polymère (méth)allylique ou (méth)acrylique, (plus particulièrement ceux obtenus à partir de monomères ou prépolymères dérivés du bisphénol-A, utilisés seuls ou en mélange avec d'autres monomères copolymérisables), à base de poly(thio)uréthane, ou encore à base de résine polystyrène ou diallylphtalate.

L'oxyde de titane pur étant un des matériaux possédant le plus fort indice de réfraction (respectivement 2,75 et 2,57 pour les formes cristallographiques rutile et anatase), l'homme du métier n'est pas incité à envisager la combinaison des effets photocatalytiques et anti-reflets. Cette combinaison est considérée comme incompatible, car les couches à haut indice de réfraction vont détruire la fonctionnalité anti-reflets, ou tout au moins la dégrader fortement. Dans le cadre de la présente invention, les inventeurs ont choisi des modes de réalisation dans lesquels le revêtement photocatalytique possède un indice de réfraction inférieur à 2, de préférence inférieur à 1,9, voire à 1,8, et notamment inférieur à 1,7, voire à 1,6. De manière particulièrement préférée l'indice de réfraction du revêtement photocatalytique est même inférieur ou égal à 1,5. De cette manière il s'est révélé étonnamment possible d'obtenir une vraie combinaison des fonctionnalités photocatalytiques et anti-reflets, dans laquelle le facteur de réflexion du matériau reste inférieur au facteur de réflexion du substrat non-revêtu. Cela diffère de ce qui est connu de l'état de la technique, dans lequel des couches intermédiaires sont parfois disposées sous le revêtement photocatalytique dans le seul but d'atténuer la réflexion de la lumière par ce dernier, sans toutefois obtenir un facteur de réflexion plus faible que celui du substrat nu.

Pour une application dans le domaine de la lunetterie, il est également préférable que l'activité photocatalytique soit extrêmement intense, afin que les salissures ne gênent la vision que pendant un temps très court. Cela est d'autant plus préférable dans le cas de personnes passant la majeure partie de leur temps en intérieur, où l'exposition au rayonnement solaire, notamment dans le domaine des ultraviolets (UV) est faible. En extérieur, la puissance moyenne du rayonnement UVA (dans le domaine de longueurs d'ondes 315-400nm) est par exemple d'environ 50W pour une surface irradiée de 1 m² ; elle passe à moins de 2W/m² en intérieur, notamment du fait du pouvoir filtrant des vitrages.

Le substrat selon l'invention est donc de préférence revêtu d'une couche photocatalytique dont l'activité dans des conditions d'irradiation extérieure (kₑₓₜ), exprimée en vitesse de dégradation d'acide stéarique, est supérieure ou égale à 1.10⁻², notamment 2.10⁻², voire 3.10⁻² cm⁻¹/min, et même 3,5.10⁻²cm⁻¹/min.

La couche photocatalytique possède avantageusement, dans des conditions d'irradiation intérieure, une activité (kᵢₙₜ), exprimée en pourcentage massique d'acide stéarique dégradé après 2 heures d'irradiation, supérieure à 15%, notamment supérieure à 20%, et préférentiellement supérieure à 30%, voire 40%, et même 50%.

La vitesse de dégradation d'acide stéarique exprime la vitesse de diminution de l'aire des bandes de vibration d'élongation (encore appelée « stretching ») des groupements CH₂-CH₃ mesurée par spectroscopie infrarouge à transformée de Fourier (FTIR) dans des conditions qui seront détaillées plus loin.

Les conditions de mesure de l'activité photocatalytique, tant en conditions d'illumination intérieure qu'extérieure sont détaillées dans la description des exemples selon l'invention.

Selon un mode de réalisation préféré de l'invention, le revêtement photocatalytique est caractérisé par une structure mésoporeuse, de préférence réalisée par un procédé de type sol-gel, comportant de l'oxyde de titane au moins partiellement cristallisé, notamment sous forme anatase et/ou rutile. La structure mésoporeuse permet en effet d'accroître de manière importante la surface spécifique du matériau, augmentant ainsi considérablement l'activité photocatalytique. En outre, les matériaux minéraux poreux, donc de faible densité, présentent de manière générale un indice de réfraction bas, d'autant plus bas que la porosité est forte.

Le terme « mésoporeux » fait ici référence à des pores de diamètres compris entre 2 et 50 nm. La structure mésoporeuse est à base d'au moins un composé de l'un au moins des éléments Si, W, Sb, Ti, Zr, Ta, V, B, Pb, Mg, Al, Mn, Co, Ni, Sn, Zn, In ,Fe et Mo, le cas échéant en liaison covalente avec des éléments tels que O, S, N, C.

La structure mésoporeuse, à l'exception de l'oxyde de titane, est de préférence constituée majoritairement de silice (SiO₂) afin de conférer un faible indice de réfraction global au revêtement selon l'invention.

Lorsque la structure mésoporeuse contient de la silice, il est apparu avantageux aux inventeurs de choisir un revêtement possédant un rapport atomique Ti/Si compris de préférence entre 0,25 et 2, notamment entre 0,6 et 1,2, voire sensiblement égal à 1. Les revêtements possédant de faibles rapports Ti/Si ne présentent en effet pas les propriétés photocatalytiques souhaitées, tandis que les rapports Ti/Si élevés confèrent au matériau de forts indices de réfraction.

Le réseau de pores, avantageusement obtenu à l'aide d'agents structurants organiques, possède de préférence un ordre à moyenne ou longue distance (quelques nanomètres à quelques micromètres).

L'oxyde de titane au moins partiellement cristallisé est par exemple incorporé dans la structure mésoporeuse sous forme de particules parfaitement discernables. Il est éventuellement dopé ou associé à d'autres matériaux afin d'augmenter l'activité photocatalytique ou de créer une activité plus intense dans le domaine des longueurs d'ondes du visible (comme expliqué dans les demandes WO 97/10185 et WO 97/10186), et comprend des nanoparticules de diamètres compris entre 0,5 et 100 nm, notamment entre 1 et 80 nm, elles-mêmes constituées d'amas de grains ou cristallites élémentaires de diamètres compris entre 0,5 et 10 nm. Le terme « diamètre » est à prendre ici au sens large, il s'agit plus d'une évaluation de la taille de la nanoparticule ou de la cristallite. La forme de celle-ci peut se rapprocher d'une sphère, ou bien d'une forme allongée en grain de riz ou d'une forme complètement aléatoire. L'ensemble de la structure mésoporeuse incorporant l'oxyde de titane est essentiellement solide, susceptible d'une cohésion, d'une tenue mécanique et d'une résistance à l'abrasion excellentes. La structure mésoporeuse est susceptible d'être exclusivement composée de titane ou d'un composé du titane tel que son oxyde, notamment cristallisé sous forme anatase et/ou rutile. Il s'est avéré que l'oxyde de titane ainsi incorporé exerce son activité photocatalytique à un degré exceptionnellement élevé. Ainsi un rayonnement ultra-violet résiduel après traversée d'un vitrage simple ou multiple, ou un rayonnement ultra-violet résiduel provenant d'un éclairage électrique d'intérieur suffit au substrat selon ce mode préféré de l'invention pour qu'il dégrade un résidu organique, et pour que celui-ci soit ensuite entraîné dans un film liquide relativement uniforme qui se forme le cas échéant sur le substrat rendu hydrophile par le rayonnement. Le revêtement de l'invention allie donc la fonctionnalité de dégradation des résidus organiques -par photocatalyse- et d'évacuation des résidus organiques et minéraux -caractère hydrophile/oléophile- sous l'effet de tout liquide, tel que de condensation. Les performances élevées procurées par ce mode préféré de l'invention sont peut être attribuables au moins en partie à l'interconnexion du réseau de pores, permettant une bonne accessibilité des pollutions vers les particules d'oxyde de titane, de même qu'une bonne diffusion dans le revêtement des espèces photogénérées en surface de ces particules.

D'autre part, la résistance à l'abrasion et la durabilité de l'activité photocatalytique à un tel degré élevé sont excellentes. Ce mode de réalisation préféré de l'invention permet donc également de conserver la porosité après abrasion, alors que l'on pouvait plutôt attendre qu'une abrasion ait pour conséquence une densification de la couche superficielle et donc finalement, une perte des propriétés anti-salissures.

Un empilement multicouches est interposé entre le substrat et le revêtement photocatalytique de manière à réduire plus efficacement le facteur de réflexion lumineuse du substrat selon l'invention.

L'empilement multicouches ne comprend de préférence pas de couche métallique, notamment à base d'argent, de titane ou de platine. La présence de ces couches diminue en effet fortement la transmission lumineuse du substrat revêtu. Les inventeurs ont en outre mis en évidence que leur présence génère une faible résistance mécanique et chimique.

Le revêtement ainsi interposé est composé de couches minces en matériau diélectrique d'indices de réfraction alternativement forts et faibles comportant successivement :
- une première couche 1 à haut indice, d'indice de réfraction n₁ compris entre 1,8 et 2,3 et d'épaisseur géométrique e₁ comprise entre 5 et 50 nm,
- une seconde couche 2 à bas indice, d'indice de réfraction n₂ compris entre 1,35 et 1,65, d'épaisseur géométrique e₂ comprise entre 10 et 60 nm,
- une troisième couche 3 à haut indice, d'indice de réfraction n₃ compris entre 1,8 et 2,5, d'épaisseur géométrique e₃ comprise entre 40 et 150 nm,
Le revêtement photocatalytique à base d'oxyde de titane constitue alors une quatrième couche, disposée sur la couche 3. Afin d'optimiser les propriétés anti-reflet du revêtement global, et notamment d'obtenir des facteurs de réflexion très faibles, son épaisseur géométrique e₄ est de préférence comprise entre 40 et 150 nm.

Au sens de l'invention, on comprend par "couche" soit une couche unique, soit une superposition de couches où chacune d'elles respecte l'indice de réfraction indiqué et où la somme de leurs épaisseurs géométriques reste également la valeur indiquée pour la couche en question.

Au sens de l'invention, les couches sont en matériau diélectrique, notamment du type oxyde, nitrure ou d'oxynitrure d'un élément métallique ou semi-conducteur. On n'exclut cependant pas qu'au moins l'une d'entre elles soit modifiée de façon à être au moins un peu conductrice, par exemple en dopant un oxyde métallique, ceci par exemple pour conférer à l'empilement antireflet également une fonction antistatique.

Ces critères d'épaisseur et d'indice de réfraction préférentiels permettent d'obtenir un effet antireflet à large bande de basse réflexion lumineuse, (c'est-à-dire tel que la face revêtue possède une valeur de réflexion inférieure à la valeur de réflexion d'une face du substrat non-revêtu sur l'ensemble de la gamme 400-800nm), présentant en outre une teinte neutre en transmission et une bonne esthétique en réflexion, et ce quel que soit l'angle d'incidence sous lequel on observe le substrat ainsi revêtu.

Les matériaux les plus appropriés pour constituer la première et/ou la troisième couche de l'empilement, possédant un indice élevé, sont à base d'oxyde(s) métallique(s) choisi(s) parmi l'oxyde de titane (TiO₂), l'oxyde de zinc (ZnO), l'oxyde d'étain (SnO₂), l'oxyde de zirconium (ZrO₂), ou des oxydes mixtes de plusieurs de ces oxydes, par exemple les oxydes mixtes étain-zinc (SnₓZn_{y}O_{z}), les oxydes mixtes zinc-titane (TiZnOₓ) ou silicium-titane (SiₓTi_{y}O_{z}.), ou encore titane-zirconium (TiₓZr(₁₋ₓ)O₂). Elles peuvent aussi être à base de nitrure(s) choisi(s) parmi le nitrure de silicium (Si₃N₄) et/ou le nitrure d'aluminium (AIN), ou un nitrure mixte silicium/zirconium (SiZrNₓ). Tous ces matériaux peuvent être éventuellement dopés pour améliorer leurs propriétés de résistance chimique et/ou mécanique et/ou électrique.

Les matériaux les plus appropriés pour constituer la seconde couche de l'empilement A, possédant un bas indice, sont à base d'oxyde de silicium, d'oxynitrure et/ou d'oxycarbure de silicium ou encore à base d'un oxyde mixte de silicium et d'aluminium. Un tel oxyde mixte tend à avoir une meilleure durabilité, notamment chimique, que du SiO₂ pur (un exemple en est donné dans le brevet EP- 791 562). On peut ajuster la proportion respective des deux oxydes pour obtenir l'amélioration de durabilité escomptée sans trop augmenter l'indice de réfraction de la couche.

Afin de conférer au matériau selon l'invention des propriétés de résistance thermomécanique (par exemple pour améliorer la résistance au bombage de vitrages pour comptoirs), l'empilement sur lequel le revêtement photocatalytique est déposé est de préférence constitué selon les enseignements du brevet FR 2 841 894.

Dans le cadre du mode de réalisation selon lequel le revêtement photocatalytique est formé par un procédé sol-gel, le revêtement ou l'empilement interposé entre le substrat et ledit revêtement photocatalytique est avantageusement optimisé de manière à ce que des variations de l'épaisseur du revêtement photocatalytique, inhérentes à ce type de procédé, n'affectent pas de manière importante la valeur du facteur de réflexion lumineuse.

D'une manière générale et pour répondre à l'un des buts de l'invention, le substrat revêtu est avantageusement tel que l'étendue de la plage d'épaisseur dudit revêtement photocatalytique pour laquelle le facteur de réflexion du substrat revêtu reste inférieur au facteur de réflexion du substrat non-revêtu (voire inférieur à 60%, ou même 40% de cette valeur) représente au moins 15%, voire 25% et même 30% ou 50% de la valeur médiane de cette plage. L'avantage de ce mode de réalisation réside dans une plus grande simplicité de dépôt, le contrôle de l'épaisseur n'ayant pas besoin d'être d'une extrême précision. Cet avantage est particulièrement accentué lorsque le revêtement photocatalytique est obtenu par procédé sol-gel, pour lequel le contrôle fin de l'épaisseur et l'obtention d'une épaisseur parfaitement homogène sont difficiles.

Un autre objet de l'invention concerne le procédé d'obtention d'un substrat tel que décrit ci-dessus, ce procédé comprenant successivement les étapes suivantes :
- l'obtention d'un « sol » comprenant au moins un précurseur du matériau constituant la structure mésoporeuse du revêtement et au moins un agent structurant organique dilués dans un solvant,
- une étape de « mûrissement » du sol correspondant à un début de précipitation du précurseur autour de l'agent structurant organique et la croissance de molécules dérivées du précurseur,
- l'ajout dans le sol de nanoparticules ou de cristallites d'oxyde de titane éventuellement dopé, dont les tailles caractéristiques sont comprises entre 0,5 et 100 nm,
- l'application du sol sur au moins une surface du substrat à revêtir,
- l'élimination du solvant,
- l'élimination de l'agent structurant organique.

Le sol contient de préférence au moins un précurseur d'oxyde, par exemple un composé hydrolysable tel qu'un alcoxyde ou un halogénure, et avantageusement au moins un précurseur de silice (SiO₂), tel que, par exemple, le tétraéthoxysilane (TEOS) ou le tétraméthoxysilane (TMOS). Les précurseurs de silice représentent de préférence la majorité, voire la totalité des précurseurs du matériau constituant la structure mésoporeuse. Il peut également contenir au moins un précurseur d'oxyde de titane, tel que le tétrabutoxyde de titane ou le tétraéthoxyde de titane.

L'agent structurant est avantageusement choisi parmi les tensioactifs cationiques, de préférence du type ammonium quaternaire tel que le bromure de cétyltriméthylammonium (CTAB), ou non ioniques, tels que les copolymères di-bloc ou tri-bloc à base par exemple d'oxyde d'éthylène ou de propylène.

L'ajout de l'agent structurant organique peut également être réalisé après les étapes de préparation et de mûrissement du sol, cette dernière étape permettant une condensation préliminaire du précurseur favorisant la structuration du revêtement d'oxyde condensé sur la surface support en domaines de grande dimension. Des conditions avantageuses de mûrissement comprennent le maintien du sol à une température de 40 à 60°C pendant une durée de 30 min à 24 heures, le temps de mûrissement étant d'autant plus court que la température est élevée.

Les solvants utilisés sont de préférence des alcools, notamment l'éthanol qui a l'avantage d'être non toxique.

L'application du sol sur le substrat peut être réalisée par les techniques de dépôt sol-gel bien connues de l'homme du métier, telles que celles décrites dans la demande de brevet EP-A-850 204 déjà mentionnée, par exemple :
- spin-coating (dépôt sur un substrat mis en rotation),
- dip-coating ou trempage (immersion du substrat dans le sol puis retrait à vitesse contrôlée),
- enduction laminaire,
- cell-coating, les substrats à revêtir formant une cavité étroite (ou « cellule ») délimitée par deux faces sensiblement parallèles remplie par le sol à déposer puis vidée de manière contrôlée,
- techniques de pulvérisation ou de spray-coating (pistolettage... ).

Lorsque le substrat est en matière plastique, il est souhaitable que les étapes après application du sol sur au moins une surface du substrat aient lieu à des températures inférieures à 150°C, de préférence inférieures à 100°C, ou même inférieures ou égales à 80°C, voire 60°C, afin de ne pas dégrader le substrat et/ou afin de ne pas créer de contraintes mécaniques qui pourraient fragiliser le substrat et/ou les différents revêtements du fait de la forte différence de coefficients de dilatation entre les matériaux organiques et les matériaux minéraux.

Dans ce cadre, un mode de réalisation de l'invention particulièrement préféré consiste à opérer une consolidation du revêtement à des températures comprises entre 50 et 80°C, et, successivement ou simultanément, à éliminer non pas thermiquement ledit agent structurant organique, mais par le biais d'une irradiation, par exemple sous rayonnement ultraviolet. La présence d'oxyde de titane aux propriétés photocatalytiques se révèle alors capable de dégrader rapidement la totalité des agents structurants.

Les inventeurs ont découvert un avantage supplémentaire à ces traitements réalisés à basse température, lesquels confèrent aux revêtements une plus grande porosité, et donc une plus forte activité photocatalytique.

Des couches ou empilements de couches fonctionnelles peuvent également être interposées entre le substrat selon l'invention et les couches à fonction anti-reflet et photocatalytiques. Il peut s'agir de couches à fonction antistatique ou thermique (bas-émissive, anti-solaire...) notamment choisies à base d'un matériau conducteur du type métal (par exemple l'argent) ou du type oxyde métallique dopé comme l'oxyde d'indium dopé à l'étain ITO, l'oxyde de zinc dopé aluminium ZAO, l'oxyde d'étain dopé avec un halogène comme le fluor ou avec de l'antimoine.

Il peut également s'agir de couches possédant une dureté les rendant aptes à remplir des fonctions anti-rayures ou anti-abrasion, particulièrement utiles dans le cas des lentilles ophtalmiques. Ces couches peuvent être des couches organiques ou minérales, ou encore des couches hybrides organiques/inorganiques. Parmi cette dernière famille, on peut citer des revêtements durs anti-abrasion obtenus par durcissement d'une composition contenant de la silice colloïdale, éventuellement un catalyseur de réticulation et un hydrolysat ou un mélange d'hydrolysats de composé(s) silane(s) tels que des alkoxysilanes époxydés et/ou des alkylsilanes fluorés et/ou des silanes non-époxydés. Notamment pour les applications dans l'ophtalmique, ces couches anti-abrasion sont de préférences déposées sur ou sous une couche primaire anti-choc organique ou hybride, de préférence à base de polysiloxane.

Il peut enfin s'agir de couches destinées, dans le cas de substrats organiques à protéger lesdits substrats contre l'action photocatalytique de l'oxyde de titane, ou dans le cas d'un substrat à base de verre minéral à éviter la migration des ions alcalins du verre dans la couche photocatalytique. Dans le premier cas, la sous-couche est de préférence à base de silice (par exemple obtenue par un procédé sol-gel), ou peut être constituée par la couche anti-rayures ou anti-abrasion décrite dans le paragraphe précédent. Dans le second cas, la sous-couche est de préférence à base d'oxycarbure de silicium. Ces couches peuvent également, le cas échéant, appartenir à l'empilement de couches destiné à diminuer le facteur de réflexion global du matériau.

Le substrat selon l'invention peut également être un vitrage possédant des propriétés optiques variables commandées électriquement, tels que les vitrages électrochromes, des vitrages à cristaux liquides permettant de passer d'un état transparent à un état translucide, ou encore des vitrages rendus éclairants par l'interposition d'un gaz rare pouvant être le siège de décharges luminescentes, ou de diodes électroluminescentes.

L'invention a également pour objet l'utilisation de tels substrats revêtus en tant que vitrages, vitrines de musée ou de magasins, vitres d'aquarium, vitrages pour mobilier intérieur ou urbain, lentilles ophtalmiques, vitrages pour écrans de visualisation, vitrages pour panneaux solaires producteurs de chaleur et/ou d'électricité, vitrages pour véhicules automobiles terrestres, aquatiques ou aériens, miroirs, notamment pour rétroviseurs, optiques de phares d'automobiles, dispositifs d'éclairage.

La présente invention sera mieux comprise à la lecture de la description détaillée ci-après d'exemples de réalisation non limitatifs.

### EXEMPLE 1

Un substrat de verre clair silico-sodo-calcique de 4mm d'épaisseur et commercialisé par Saint-Gobain Glass sous le nom commercial SGG Planilux^{®} produit par le procédé float est revêtu sur ses deux faces par procédé de pulvérisation cathodique assisté par champ magnétique (dit procédé « magnétron ») de l'empilement de trois couches suivant :
Verre / Si₃N₄ / SiO₂ / TiO₂
   20,2nm 22,1 nm 95,9nm
   (le même empilement est présent sur la face opposée)

La première couche présente un indice de réfraction de 2,04 à 550 nm.

Pour les deuxième et troisième couches, ces valeurs sont respectivement de 1,48 et 2,33 à 550 nm

On forme sur les deux faces du matériau obtenu un revêtement photocatalytique à structure mésoporeuse.

La composition liquide de traitement est obtenue en mélangeant dans une première étape 22,3 ml de tétraéthoxysilane, 22,1 ml d'éthanol absolu, 9 ml de HCl dans de l'eau déminéralisée jusqu'à ce que la solution devienne limpide (pH final 1,25), puis en plaçant le ballon au bain marie à 60°C pendant 1h.

Dans une deuxième étape, on ajoute au sol obtenu précédemment un agent structurant organique, sous la forme d'une solution d'un copolymère blocs polyoxyéthylène-polyoxypropylène commercialisé par la société BASF sous la marque enregistrée Pluronic PE6800 (masse molaire 8000), en proportions telles que le rapport molaire PE6800/Si = 0,01. Ceci est obtenu en mélangeant 3,78 g de PE6800, 50 ml d'éthanol et 25 ml du sol.

Des nanoparticules de TiO₂ cristallisées sous la forme anatase et de taille 50 nm environ sont ajoutées à la composition liquide ainsi obtenue avant le dépôt sur échantillon. Le dépôt se fait sur les deux faces de l'échantillon par cell-coating.

Les échantillons subissent ensuite un traitement thermique à 250 °C pendant 2 heures afin de consolider le revêtement mésoporeux et d'évacuer le solvant et l'agent structurant organique.

Les pores du revêtement ainsi formé ont une taille de 4-5 nm.

On vérifie par analyse SIMS (Secondary Ion Mass Spectroscopy) du revêtement à structure mésoporeuse que le rapport atomique Ti/Si est exactement identique à celui de la composition liquide de départ. Ce rapport Ti/Si est choisi égal à 1. L'analyse SIMS permet également de vérifier que les nanoparticules sont réparties de façon homogène dans les trois dimensions du revêtement.

L'épaisseur e₄ du revêtement photocatalytique en nm est mesurée à partir de profils SIMS et de clichés MEB (Microscope Electronique à Balayage) et vaut 72nm. Dans le cas présent, l'empilement multicouches interposé sous ce revêtement est optimisé de manière à ce que le facteur de réflexion lumineuse du matériau final soit faiblement affecté par des modifications de l'épaisseur du revêtement photocatalytique. En l'occurrence, l'épaisseur du revêtement photocatalytique peut varier de 60 à 100nm.

L'indice de réfraction de ce revêtement est mesuré par des techniques d'ellipsométrie bien connues de l'homme du métier. Il vaut 1,54 à 550 nm

Les mesures de réflexion sont effectuées à l'aide d'un spectrophotomètre UV-visible. Les valeurs de facteurs de réflexion lumineuse (R_{L}) et de paramètres colorimétriques (a*, b*) sont calculés entre 380 et 780nm à partir d'un spectre en réflexion expérimental sous incidence quasi-normale en prenant en références l'illuminant D65 tel que défini par la norme ISO/CIE 10526 et l'observateur CIE 1931 tel que défini par la norme ISO/CIE 10527.

La mesure de l'activité photocatalytique est effectuée de la façon suivante :
- découpe d'échantillons de 5x5 cm²,
- nettoyage des échantillons pendant 45 minutes sous irradiation UV et sous balayage d'oxygène,
- mesure du spectre infrarouge par FTIR pour des nombres d'onde compris entre 4000 et 400cm⁻¹, pour constituer un spectre de référence,
- dépôt de l'acide stéarique : 60 microlitres d'une solution d'acide stéarique dissout à raison de 5g/L dans du méthanol est déposée par spin-coating sur l'échantillon,
- mesure du spectre infrarouge par FTIR, mesure de l'aire des bandes d'élongation des liaisons CH₂-CH₃ entre 3000 et 2700cm⁻¹,
- exposition au rayonnement de type UVA : la puissance reçue par l'échantillon, respectivement d'environ 35 W/m² et 1,4W/m² pour simuler l'exposition en extérieur ou en intérieur, est contrôlée par une cellule photoélectrique dans la gamme de longueurs d'onde 315-400nm. La nature des lampes est également différente en fonction des conditions d'illumination : tubes fluorescents blanc chaud référence Philips T12 pour l'exposition intérieure, lampes UV Philips Cleo Performance pour l'exposition extérieure,
- suivi de la photodégradation de la couche d'acide stéarique après des durées d'exposition successives de 10 minutes par mesure de l'aire des bandes d'élongation des liaisons CH₂-CH₃ entre 3000 et 2700cm⁻¹.
- l'activité photocatalytique en conditions extérieures kₑₓₜ est définie par la pente, exprimée en cm⁻¹.min⁻¹, de la droite représentant l'aire des bandes d'élongation des liaisons CH₂-CH₃ entre 3000 et 2700cm⁻¹ en fonction de la durée d'exposition aux UV, pour une durée comprise entre 0 et 30 minutes.
- l'activité photocatalytique en conditions intérieures kᵢₙₜ est définie comme le pourcentage massique d'acide stéarique dégradé (calculé à partir du spectre infrarouge) après deux heures d'illumination.

Dans ces conditions, on mesure :
kₑₓₜ = 3,0.10⁻² cm⁻¹/min
kᵢₙₜ = 20%

Le facteur de réflexion lumineuse R_{L} est égal à 1%.

Les paramètres colorimétriques (a*, b*) valent (0,0), ce qui témoigne d'une teinte parfaitement neutre.

La réflexion d'une face revêtue est donc de 12,5% de la réflexion d'une face du substrat nu.

### EXEMPLE 2 (COMPARATIF)

Cet exemple est issu de la demande FR 2 814 094, dans laquelle il constitue l'exemple 4.

Seule une face du substrat est traitée, le matériau étant alors constitué de la façon suivante :
Verre / Si₃N₄ / SiO₂ / TiO₂
   25nm 22nm 104nm

Le revêtement photocatalytique est ici constitué par une couche de TiO₂ obtenue par procédé de pulvérisation cathodique.

La réflexion lumineuse est de 15,8%, ce qui signifie que la face traitée possède un facteur de réflexion lumineuse d'environ 11,8%, soit près de trois fois la réflexion d'une face du substrat non-revêtu. Ce revêtement ne peut donc pas être qualifié d'anti-reflet au sens de la présente invention, même s'il est ainsi qualifié dans la demande dont il est issu.

### EXEMPLE 3

On emploie ici un substrat à base de polycarbonate, destiné à la fabrication de lentilles ophtalmiques, d'indice 1,586 et revêtu d'un revêtement anti-abrasion obtenu par durcissement d'une solution composée de silice colloïdale et d'un hydrolysat d'alkoxysilane époxydé.

Ce substrat est revêtu d'une couche photocatalytique dans des conditions similaires à celles détaillées dans l'exemple 1.

Les différences par rapport aux conditions de l'exemple 1 sont les suivantes :
- le traitement de consolidation et d'évacuation du solvant et de l'agent structurant ne peut être effectué à haute température du fait de la faible résistance en température du substrat. Ces traitements sont donc remplacés par un traitement thermique de consolidation effectué à 60°C pendant 3 heures sous irradiation UV. Cette dernière étape permet ainsi de dégrader l'agent structurant grâce à l'action photocatalytique de l'oxyde de titane.
- le rapport Ti/Si vaut 0,25

Dans ce cas, le revêtement anti-abrasion présente également l'intérêt d'empêcher toute dégradation du substrat polycarbonate par photocatalyse.

L'indice de la couche photocatalytique est de 1,39 à 550 nm, son épaisseur est de 100 nm environ.

Le facteur de réflexion lumineuse d'une face revêtue vaut 1,05%, soit 22% du facteur de réflexion d'une face du substrat seul. Les paramètres colorimétriques (a*, b*) valent (5,6 ;7,6).

Le revêtement photocatalytique seul est donc dans ce cas à même de conférer une fonctionnalité anti-reflet au substrat, toutefois plus faible que ne peut le faire un empilement plus complexe.

### EXEMPLE 4 (COMPARATIF)

Cet exemple reprend les mêmes conditions que l'exemple 3, à la seule différence près que le rapport Ti/Si vaut 2.

Dans ce cas l'indice du revêtement photocatalytique est de 1,61 à 550 nm, et le facteur de réflexion lumineuse du matériau est de 9,72%, soit plus élevé que le facteur de réflexion du substrat non-revêtu.

L'augmentation de la teneur en titane dans le revêtement photocatalytique a en effet eu pour conséquence une augmentation de l'indice de réfraction préjudiciable à la possibilité d'obtenir une fonctionnalité anti-reflets.

### EXEMPLE 5

Cet exemple reprend les conditions de l'exemple 4, mais avec insertion entre le revêtement photocatalytique et le revêtement anti-abrasion d'un empilement de couches obtenues par évaporation sous vide. Cet empilement comprend une première couche à base d'oxydes de zirconium et de titane, une deuxième couche à base de silice, une troisième couche à base d'oxyde de titane selon la configuration suivante :
Polycarbonate / ZrTiO_{X} / SiO₂ / TiO₂
   36nm 15nm 56nm

On obtient ainsi :
un facteur de réflexion lumineuse R_{L} égal à 1,21% ;
des paramètres colorimétriques (a*, b*) valant (5,9 ;-5,8) ;
la réflexion d'une face revêtue représente donc 12,5% de la réflexion d'une face du substrat nu.

Ce substrat est ainsi particulièrement apte à être utilisé en tant que lentilles ophtalmiques. Il présente en effet les avantages conjoints
- d'une très forte activité photocatalytique en intérieur comme en extérieur garantissant par exemple une disparition rapide des traces de doigt,
- d'une faible réflexion lumineuse et d'une teinte relativement neutre.

### EXEMPLE 6

Cet exemple reprend dans les grandes lignes les conditions opératoires de l'exemple 1.

Les différences sont les suivantes :

Le rapport Ti/Si vaut 0,25. L'indice de réfraction du revêtement photocatalytique vaut 1,39 à 550nm, et son épaisseur est égale à 97nm. Cette dernière grandeur peut toutefois varier entre 70 et 120nm sans affecter grandement le facteur de réflexion lumineuse, ce qui représente une plage de variation dont l'étendue est de plus de 50% par rapport à la valeur médiane de cette plage.

Les épaisseurs des couches de l'empilement interposé entre le substrat et le revêtement photocatalytique sont :
Verre / Si₃N₄ / SiO₂ / TiO₂
   18,2nm 43,9nm 113,4nm

On obtient ainsi :
R_{L}=1%
(a*,b*) = (0,0)
kₑₓₜ = 1,0.10⁻² cm⁻¹/min

Les résultats optiques sont donc semblables à ceux obtenus en exemple 1.

### EXEMPLE 7

Cet exemple reprend les conditions opératoires de l'exemple 1, à l'exception des conditions suivantes :

Le substrat est en verre imprimé extra-clair commercialisé par Saint-Gobain Glass sous la marque SGG Albarino^{®}. Seule une face du substrat est traitée.

Le rapport Ti/Si vaut 2. L'indice de réfraction du revêtement photocatalytique vaut alors 1,61 à 550nm, et son épaisseur est égale à 83nm. Cette dernière grandeur peut toutefois varier entre 70 et 100nm sans affecter grandement le facteur de réflexion lumineuse, ce qui représente une plage de variation dont l'étendue est de 35% par rapport à la valeur médiane de cette plage.

Les épaisseurs des couches de l'empilement interposé entre le substrat et le revêtement photocatalytique sont :
Verre / Si₃N₄ / SiO₂ / TiO₂
   41,0nm 14,2nm 56,1 nm

On obtient ainsi :
R_{L} = 4,5%
(a*,b*) = (1,1;-2,0)
kₑₓₜ = 4,9.10⁻² cm⁻¹/min

Le facteur de réflexion de la face revêtue vaut 0,6%, soit 15% du facteur de réflexion d'une face du substrat non-revêtu.

La couche photocatalytique possédant un rapport Ti/Si élevé, son activité est extrêmement intense.

Ce verre est employé pour la réalisation de panneaux photovoltaïques. La combinaison des fonctionnalités anti-reflet et auto-nettoyantes permet ainsi d'atteindre un rendement énergétique élevé et durable dans le temps.

### EXEMPLES 8 à 10

Ces différents exemples diffèrent de l'exemple 1 par la nature de l'empilement interposé entre le substrat et le revêtement photocatalytique, et éventuellement par le rapport Ti/Si.

Cet empilement est constitué par les couches suivantes :
Verre / Si₃N₄ / SiO₂ / Si₃N₄
   e₁ (nm) e₂(nm) e₃(nm)

La troisième couche est ici en nitrure de silicium en lieu et place de l'oxyde de titane. Cette modification a pour but l'amélioration de la résistance de l'empilement aux sollicitations thermomécaniques se produisant durant les étapes de trempe ou de bombage.

Le tableau 1 décrit les conditions opératoires et les résultats obtenus pour ces trois exemples.

**Tableau 1**

| Ex. | Ti/Si | e₁(nm) | e₂(nm) | e₃(nm) | e₄(nm) | Δe₄ (nm) | R_{L}(%) | a* | b* |
|---|---|---|---|---|---|---|---|---|---|
| 8 | 0,25 | 13,5 | 43,6 | 146,9 | 89 | 60-130 | 1,0 | 0 | 0 |
| 9 | 1 | 20,9 | 25,4 | 70,5 | 84 | 60-100 | 1,0 | 7,8 | -9,5 |
| 10 | 2 | 16,3 | 33,1 | 67,2 | 85 | 70-100 | 1,6 | 17,4 | -21 |

La grandeur Δe₄ représente la plage de valeurs de e₄ pour laquelle la valeur du facteur de réflexion demeure sensiblement inférieure à celle du substrat nu. L'étendue de cette plage représente respectivement 74%, 50% et 35% de la valeur médiane de la plage.

Les facteurs de réflexion des faces revêtues valent respectivement 12,5%, 12,5% et 20% de la valeur du facteur de réflexion d'une face non-revêtue. En outre, la valeur de réflexion d'une face revêtue reste inférieure à la valeur de réflexion d'une face du substrat non-revêtu sur l'ensemble de la gamme 400-800nm.

Ces verres sont particulièrement adaptés à la production de vitrines ou comptoirs pour les commerces. Les vitrines bombées ainsi formées présentent l'avantage de mettre en valeur les objets mis en vente grâce à la fonctionnalité anti-reflets tout en possédant une action auto-nettoyante efficace en intérieur.

### EXEMPLE 11 (COMPARATIF)

L'exemple indiqué au tableau 1 de la demande de brevet EP-A-1 291 331 susmentionnée a été reproduit en fonction de l'enseignement technique contenu dans ladite demande. L'empilement sous-jacent et la couche de 107,76nm d'oxyde de titane ont été déposé par le procédé magnétron.

L'activité kₑₓₜ mesurée en conditions extérieures est égale à 0,3.10⁻² cm⁻¹/min, ce qui est nettement insuffisant pour assurer une dégradation rapide des salissures organiques. En outre, comme présenté en figure 8 de la demande susmentionnée, une très faible variation de l'épaisseur (en l'occurrence 7 nm) modifie fortement la valeur du facteur de réflexion. La réflexion du substrat revêtu est enfin extrêmement dépendante de la longueur d'ondes, les valeurs obtenues à 400nm et 800nm étant extrêmement élevées.

## Revendications

1. Substrat transparent ou semi-transparent possédant sur au moins une partie d'au moins une de ses faces un revêtement photocatalytique à base d'oxyde de titane **caractérisé en ce que** la face revêtue possède un facteur de réflexion lumineuse inférieur ou égat à 60% de celui d'une face du substrat non-revêtu et **en ce qu'**un revêtement est interposé entre le substrat et le revêtement photocatalytique de manière à réduire le facteur de réflexion lumineuse, ce revêtement étant un empilement multicouches composé de couches minces en matériau diélectrique comportant successivement :
- une première coucha 1 à haut indice, d'indicé de réfraction n₁ compris entre 1,8 et 2,3 et d'épaisseur géométrique e₁ comprise entre 5 et 50 nm,
- une seconde couche 2 à bas indice, d'indice de réfraction n₂ compris entre 1,35 et 1,65, d'épaisseur géométrique e₂ comprise entre 10 et 60 nm,
- une troisième couche 3 à haut indice, d'indice de réfraction n₃ compris entre 1,8 et 2,5, d'épaisseur géométrique e₃ comprise entre 40 et 150 nm ; et
le revêtement photocatalytique à base d'oxyde de titane constitue une quatrième couche disposée sur la couche 3 et possède un indice de réfraction à 550nm inférieur à 2.

2. Substrat selon la revendication 1, **caractérisé en ce que** l'empilement multicouches ne comprend pas de couche métallique.

3. Substrat selon la revendication 1 ou 2, **caractérisé en ce que** la face revêtue possède un facteur de réflexion inférieur ou égal à 15% de celui d'une face du substrat non-revêtu.

4. Substrat selon l'une des revendications précédentes, **caractérisé en ce que** la face revêtue possède une valeur de réflexion inférieure à la valeur de réflexion d'une face du substrat non-revêtu sur l'ensemble de la gamme 400-800nm.

5. Substrat selon l'une des revendications précédentes, **caractérisé en ce que** l'étendue de la plage d'épaisseur du revêtement photocatalytique pour laquelle le facteur de réflexion du substrat revêtu reste inférieur au facteur de réflexion du substrat non-revêtu représente au moins 15% de la valeur médiane de cette plage.

6. Substrat selon l'une des revendications précédentes, **caractérisé en ce que** le revêtement photocatalytique possède un indice de réfraction à 550nm inférieur à 1,8.

7. Substrat selon l'une des revendications précédentes, **caractérisé en ce que** le revêtement photocatalytique possède un indice de réfraction à 550nm inférieur à 1,6.

8. Substrat selon l'une des revendications précédentes, **caractérisé en ce que** le revêtement photocatalytique possède une structure mésoporeuse comportant de l'oxyde de titane au moins partiellement cristallisé.

9. Substrat selon la revendication 8, **caracterisé en ce que** la structure mésoporeuse, à l'exception de l'oxyde de titane, est constituée majoritairement de silice (SiO₂).

10. Substrat selon la revendication 8 ou 9, **caractérisé en ce que** l'oxyde de titane au moins partiellement cristallisé est incorporé dans la structure mésoporeuse sous forme de particules parfaitement discernables.

11. Substrat selon la revendication 9 ou 10, **caractérisé en ce que** le rapport atomique Ti/Si est compris entre 0,6 et 1,2.

12. Substrat en matière plastique selon la revendication 1, **caractérisé en ce qu**'un revêtement anti-rayures ou anti-abrasion est interposé entre le substrat et le revêtement photocatalytique.

13. Substrat en matière plastique selon la revendication 1, **caractérisé en ce qu**'un revêtement anti-rayures ou anti-abrasion est interposé entre le substrat et le revêtement destiné à réduire le facteur de réflexion lumineuse.

14. Procédé de réalisation d'un substrat selon l'une des revendications 8 à 11, comportant les étapes suivantes :
obtention d'un « sol » comprenant au moins un précurseur du matériau constituant la structure mésoporeuse du revêtement et au moins un agent structurant organique dilués dans un solvant,
- étape de « mûrissement » du sol,
- ajout dans le sol de nanoparticules ou de cristallites d'oxyde de titane,
- application du sol sur au moins une surface du substrat à revêtir,
- élimination du solvant,
- élimination de l'agent structurant organique.

15. Procédé selon la revendication 14, **caractérisé en ce que,** le substrat étant en matière plastique, l'étape d'élimination du solvant et de l'agent structurant organique est réalisée à une température inférieure ou égalé à 80°C sous irradiation UV.

16. Vitrage **caractérisé en ce qu**'il comprend un substrat selon la revendication 1.

17. Lentille ophtalmique **caractérisée en ce qu**'elle comprend un substrat selon la revendication 12 ou 13.

18. Utilisation du substrat selon la revendication 1 comme vitrages, lentilles ophtalmiques, vitrines de musée ou de magasins, vitres d'aquarium, vitrages pour mobilier intérieur ou urbain, vitrages pour écrans de visualisation, vitrages, pour panneaux solaires producteurs de chaleur et/ou d'électricité, vitrages pour véhicules automobiles terrestres, aquatiques ou aériens, miroirs, rétroviseurs de véhicules automobiles, optiques de phares, dispositifs d'éclairage.

## Patentansprüche

1. Transparentes oder halbtransparentes Substrat, das auf mindestens einem Teil mindestens einer seiner Flächen eine fotokatalytische Beschichtung auf Titanoxid-Basis hat, **dadurch gekennzeichnet, dass** die beschichtete Fläche einen Lichtreflexionsfaktor hat, der kleiner oder gleich 60 % dem einer Fläche des unbeschichteten Substrats ist, und dass eine Beschichtung zwischen dem Substrat und der fotokatalytischen Beschichtung eingebracht ist, um den Lichtreflexionsfaktor zu verringern, wobei diese Beschichtung ein mehrschichtiger Aufbau ist, der aus dünnen Schichten aus dielektrischem Material besteht und nacheinander Folgendes aufweist:
- eine erste Schicht 1 mit hohem Index, einem Brechungsindex n1 zwischen 1,8 und 2,3 und einer geometrischen Dicke e1 zwischen 5 und 50 nm,
- eine zweite Schicht 2 mit niedrigem Index, einem Brechungsindex n2 zwischen 1,35 und 1,65 und einer geometrischen Dicke e2 zwischen 10 und 60 nm,
- eine dritte Schicht 3 mit hohem Index, einem Brechungsindex n3 zwischen 1,8 und 2,5 und einer geometrischen Dicke e3 zwischen 40 und 150 nm; und
wobei die fotokatalytische Beschichtung auf Titanoxid-Basis eine vierte Schicht bildet, die auf der Schicht 3 angeordnet ist und einen Brechungsindex bei 550 nm kleiner als 2 aufweist.

2. Substrat nach Anspruch 1, **dadurch gekennzeichnet, dass** der mehrschichtige Aufbau keine metallische Schicht enthält.

3. Substrat nach Anspruch 1 oder 2, **dadurch gekennzeichnet, dass** die beschichtete Fläche einen Lichtreflexionsfaktor hat, der kleiner oder gleich 15 % von dem einer Fläche des unbeschichteten Substrats ist.

4. Substrat nach einem der vorhergehenden Ansprüche, **dadurch gekennzeichnet, dass** die beschichtete Fläche einen Reflexionswert hat, der über den gesamten Bereich von 400 bis 800 nm kleiner ist als der Reflexionswert einer Fläche des unbeschichteten Substrats.

5. Substrat nach einem der vorhergehenden Ansprüche, **dadurch gekennzeichnet, dass** die Größenordnung des Dickenbereichs der fotokatalytischen Beschichtung, bei dem der Lichtreflexionsfaktor kleiner bleibt als der Reflexionsfaktor des unbeschichteten Substrats, mindestens 15 % des Mittelwerts dieses Bereichs darstellt.

6. Substrat nach einem der vorhergehenden Ansprüche, **dadurch gekennzeichnet, dass** die fotokatalytische Beschichtung einen Brechungsindex bei 550 nm kleiner als 1,8 hat.

7. Substrat nach einem der vorhergehenden Ansprüche, **dadurch gekennzeichnet, dass** die fotokatalytische Beschichtung einen Brechungsindex bei 550 nm kleiner als 1,6 hat.

8. Substrat nach einem der vorhergehenden Ansprüche, **dadurch gekennzeichnet, dass** die fotokatalytische Beschichtung eine mesoporöse Struktur hat, die mindestens teilweise kristallisiertes Titanoxid aufweist.

9. Substrat nach einem der vorhergehenden Ansprüche, **dadurch gekennzeichnet, dass** die mesoporöse Struktur, mit Ausnahme des Titanoxids, mehrheitlich aus Siliziumoxid (SiO2) besteht.

10. Substrat nach Anspruch 8 oder 9, **dadurch gekennzeichnet, dass** das mindestens teilweise kristallisierte Titanoxid in die mesoporöse Struktur in Form von vollständig unterscheidbaren Partikeln eingebettet ist.

11. Substrat nach Anspruch 9 oder 10, **dadurch gekennzeichnet, dass** das atomische Verhältnis von Ti/Si zwischen 0,6 und 1,2 beträgt.

12. Substrat aus Kunststoff nach Anspruch 1, **dadurch gekennzeichnet, dass** eine kratzfeste oder abriebfeste Beschichtung zwischen dem Substrat und der fotokatalytischen Beschichtung eingebracht ist.

13. Substrat aus Kunststoff nach Anspruch 1, **dadurch gekennzeichnet, dass** eine kratzfeste oder abriebfeste Beschichtung zwischen dem Substrat und der Beschichtung eingebracht ist, die zur Verringerung des Lichtreflexionsfaktors bestimmt ist.

14. Verfahren zur Realisierung eines Substrats nach einem der Ansprüche 8 bis 11, das die folgenden Schritte aufweist:
- Herstellen eines "Sols", das mindestens einen Vorläufer des Materials, das die mesoporöse Struktur der Beschichtung bildet, und mindestens ein organisches Strukturmittel enthält, die in einem Lösungsmittel gelöst sind,
- Schritt des "Reifenlassens" des Sols,
- Zugeben von Nanopartikeln oder Kristalliten aus Titanoxid,
- Auftragen des Sols auf mindestens einer Oberfläche des zu beschichtenden Substrats,
- Entfernen des Lösungsmittels,
- Entfernen des organischen Strukturmittels.

15. Verfahren nach Anspruch 14, **dadurch gekennzeichnet, dass**, da das Substrat aus Kunststoff ist, der Schritt des Entfernens des Lösungsmittels und des organischen Strukturmittels bei einer Temperatur kleiner oder gleich 80 °C unter UV-Bestrahlung realisiert wird.

16. Verglasung, **dadurch gekennzeichnet, dass** sie ein Substrat nach Anspruch 1 enthält.

17. Ophtalmologische Linse, **dadurch gekennzeichnet, dass** sie ein Substrat nach Anspruch 12 oder 13 enthält.

18. Verwendung des Substrats nach Anspruch 1 als Verglasungen, ophtalmologische Linsen, Museums- oder Ladenvitrinen, Aquariumscheiben, Verglasungen für Innen- oder Stadtmobiliar, Verglasungen für Anzeigebildschirme, Verglasungen für Solarpanels zur Erzeugung von Wärme und/oder Elektrizität, Verglasungen für Land-, Wasser- oder Luftkraftfahrzeuge, Spiegel, Rückspiegel für Kraftfahrzeuge, Scheinwerferoptiken, Beleuchtungsvorrichtungen.

## Claims

1. A transparent or semitransparent substrate having, on at least part of at least one of its sides, a photocatalytic coating based on titanium dioxide, **characterized in that** the coated side has a light reflectance lower than or equal to 60% of that of an uncoated side of the substrate and **in that** at least one coating is inserted between the substrate and the photocatalytic coating in order to reduce the light reflectance, this coating being a multilayer stack consisting of thin dielectric layers comprising in succession:
- a first high-index layer 1, having a refractive index n₁ of between 1.8 and 2.3 and a geometric thickness e₁ of between 5 and 50 nm,
- a second low-index layer 2, having a refractive index n₂ of between 1.35 and 1.65 and a geometric thickness e₂ of between 10 and 60 nm,
- a third high-index layer 3, having a refractive index n₃ of between 1.8 and 2.5 and a geometric thickness e₃ of between 40 and 150 nm; and
the titanium dioxide-based photocatalytic coating constitutes a fourth layer, placed on layer 3, and having a refractive index at 550 nm lower than 2.

2. The substrate as claimed in claim 1, **characterized in that** the multilayer stack does not comprise a metal layer.

3. The substrate as claimed in claim 1 or 2, **characterized in that** the coated side has a reflectance lower than or equal to 15% of that of an uncoated side of the substrate.

4. The substrate as claimed in one of the preceding claims, **characterized in that** the coated side has a reflectance lower than the reflectance of an uncoated side of the substrate over the entire 400-800 nm range.

5. The substrate as claimed in one of the preceding claims, **characterized in that** the extent of the thickness range of the photocatalytic coating for which the reflectance of the coated substrate remains lower than the reflectance of the uncoated substrate represents at least 15% of the median value of this range.

6. The substrate as claimed in one of the preceding claims, **characterized in that** the photocatalytic coating has a refractive index lower than 1.8 at 550 nm.

7. The substrate as claimed in one of the preceding claims, **characterized in that** the photocatalytic coating has a refractive index lower than 1.6 at 550 nm.

8. The substrate as claimed in one of the preceding claims, **characterized in that** the photocatalytic coating has a mesoporous structure comprising at least partially crystalline titanium dioxide.

9. The substrate as claimed in claim 8, **characterized in that** with the exception of titanium dioxide, the mesoporous structure consists mainly of silica (SiO₂).

10. The substrate as claimed in claim 8 or 9, **characterized in that** the at least partially crystalline titanium dioxide is incorporated in the mesoporous structure in the form of perfectly discernible particles.

11. The substrate as claimed in claim 9 or 10, **characterized in that** the Ti/Si atomic ratio is between 0.6 and 1.2.

12. The plastic substrate as claimed in claim 1, **characterized in that** a scratch-resistant or abrasion-resistant coating is inserted between the substrate and the photocatalytic coating.

13. The plastic substrate as claimed in claim 1, **characterized in that** a scratch-resistant or abrasion-resistant coating is inserted between the substrate and the coating intended to reduce the light reflectance.

14. A method for producing a substrate as claimed in one of claims 8 to 11, comprising the following steps:
- formation of a "sol" comprising at least one precursor of the material constituting the mesoporous structure of the coating and at least one organic structuring agent diluted in a solvent,
- sol "maturing" step,
- addition of titanium dioxide nanoparticles or crystallites to the sol,
- application of the sol to at least one surface of the substrate to be coated,
- removal of the solvent,
- removal of the organic structuring agent.

15. The method as claimed in claim 14, **characterized in that**, the substrate being made of plastic, the step of removal of the solvent and the organic structuring agent is carried out at a temperature lower than or equal to 80°C under UV irradiation.

16. Glazing **characterized in that** it comprises a substrate as claimed in claim 1.

17. An ophthalmic lens **characterized in that** it comprises a substrate as claimed in claim 12 ou 13.

18. The use of the substrate as claimed in claim 1, as glazing, ophthalmic lenses, museum or shop windows, aquarium glass, glazing for interior or urban furniture, glazing for display screens, glazing for solar panels producing heat and/or electricity, glazing for automobiles, ships or aircraft, mirrors, automobile rearview mirrors, headlight optics, lighting devices.
